# EUROPÄISCHE PATENTSCHRIFT

(11) **EP 2 231 463 B1**
(45) Veröffentlichungstag und Bekanntmachung des Hinweises auf die Patenterteilung: **04.03.2015**
(21) Anmeldenummer: 08869365.0
(22) Anmeldetag: 19.12.2008
(51) Int. Cl.: B62D 1/19, B62D 1/16

(54) **LENKSÄULENANORDNUNG FÜR KRAFTFAHRZEUGE**
STEERING COLUMN ARRANGEMENT FOR MOTOR VEHICLES
ENSEMBLE COLONNE DE DIRECTION POUR VÉHICULES AUTOMOBILES

(30) Priorität: 11.01.2008 DE 102008004192
(43) Veröffentlichungstag der Anmeldung: 29.09.2010
(73) Patentinhaber: KNORR-BREMSE Systeme für Nutzfahrzeuge GmbH, 80809 München (DE)
(72) Erfinder: BATTISTELLA, Denis, I-20037 Paderno Dugnano (Milano) (IT); KANTOR, Kornél, H-6000 Kecskemét (HU); JONES, Gary, BS 15 4NU Bristol (GB); MUSER, Michael, 85276 Pfaffenhafen (DE); STOCKER, Jürgen, 70469 Stuttgart (DE)
(74) Vertreter: Schönmann, Kurt
(86) Internationale Anmeldenummer: PCT/EP2008/010930
(87) Internationale Veröffentlichungsnummer: WO 2009/086899

(56) Entgegenhaltungen:
- GB-A- 2 015 446
- GB-A- 2 406 314
- US-A- 3 429 196
- US-A- 4 966 391

## Beschreibung

Die Erfindung betrifft eine Lenksäulenanordnung für Kraftfahrzeuge gemäß dem Oberbegriff des Patentanspruches 1. Eine solche Lenksäulenanordnung ist aus der GB 2 015 446 A bekannt. Dort ist eine Lenksäule mit einem Lenkrad so durch zwei Schwenkhebel karrosseriefest angebracht, daß bei in Vorwärts-Fahrtrichtung wirkender Kraft auf das Lenkrad dieses so geschwenkt wird, daß es nach dem Verschwenken senkrechter steht und damit mit weitestgehend seiner vollen Fläche dem Oberkörper des Fahrers gegenüberliegt. Bei normaler Fahrt ist die Lenksäulenanordnung verriegelt. Durch Sensoren, die einen Auffahrunfall oder eine übermäßige Beschleunigung registrieren, wird die Verriegelung aufgehoben.

Die GB 2 406 314 A zeigt eine ähnlich verschwenkbare Lenksäulenanordnung, die jedoch durch einen pyrotechnischen Antrieb verschwenkt wird, wenn ein Sensor bei einem Unfall anspricht. Die Bewegung der Lenksäulenanordnung oder deren Verschwenken können durch Energieabsorber gedämpft werden.

Die US 4,966,391 A zeigt eine Lenksäulenanordnung mit einem Parallelogrammgestänge, in dessen Diagonale eine Gasfeder mit Rückstellwirkung angeordnet ist.

Die US 3,429,196 A zeigt eine Lenksäulenanordnung mit kolabierbarer Lenksäule und einem Gestänge, das ein Verschwenken des Lenkrades in eine senkrechtere Stellung bewirkt. Das Gestänge besteht aus Schwenkhebeln die über Querversteifungsbleche miteinander verbunden sind.

Eine weitere Lenksäulenanordnung ist aus der DE 33 28 283 A1 bekannt.

Im Stand der Technik ist weiterhin eine Vielzahl von Sicherheitslenksäulen bekannt, die den Zweck haben, den Fahrer eines Kraftfahrzeuges im Falle eines Unfalles vor Verletzungen durch das Lenkrad oder die Lenksäule zu schützen. So schlägt die DE 195 22 389 C1 eine Sicherheitslenksäule mit einer Soll-Biege-Stelle vor, die sich im Falle eines Unfalles derart verbiegen kann, daß die Lenksäule und das Lenkrad sich nicht dem Fahrer nähern, selbst wenn vor dem Fahrer liegende Karosserieteile zum Fahrer hin verschoben werden.

Eine ähnliche Vorrichtung zeigt auch die DE 27 51 068 C2, wobei dort zusätzlich noch vorgesehen ist, daß das Lenkrad über verformbare Speichen mit der Lenksäule verbunden ist, die sich bei einem Unfall derart verformen, daß die Ebene des Lenkrades parallel zur Ebene des Brustkastens des Fahrers eingestellt wird.

Modernere Fahrzeuge haben jedoch keine Lenkräder mit derartigen Speichen, sondern meist eine großflächigere Prallplatte, in der häufig auch ein Airbag untergebracht ist.
Bei Lastkraftwagen ist das Lenkrad - im Gegensatz zu Personenkraftwagen - meist relativ horizontal angeordnet, d.h. eine von dem Lenkrad definierte Ebene steht unter einem relativ kleinen Winkel zur Fahrbahnebene, während dieser Winkel bei Personenkraftwagen wesentlich größer ist. Dies hat zur Folge, daß der untere Bereich des Lenkrades, der näher dem Fahrer liegt als der obere Bereich des Lenkrades im Falle eines Unfalles mit dem Oberbauch oder dem Brustkorb des Fahrers kollidiert und aufgrund seiner geringen Fläche eine erhebliche Verletzungsgefahr darstellt.

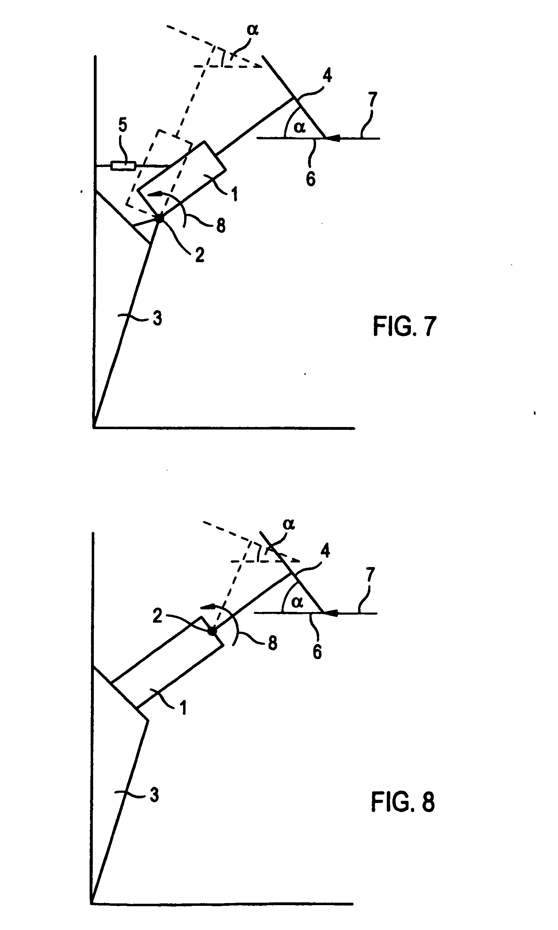

Bei durch offenkundige Vorbenutzung (beispielsweise die Firmen Scania und IVECO) bekannten Systemen ist die Lenksäule über ein Gelenk schwenkbar und kann im Falle eines Unfalles somit durch den Fahrer in Fahrtrichtung nach vorne gedrückt werden. Da sich das Schwenkgelenk unterhalb des Lenkrades befindet, bewirkt dieses Schwenken, daß sich das Lenkrad noch horizontaler einstellt, also der oben genannte Winkel noch kleiner wird und damit die Verletzungsgefahr sich noch vergrößert. Zur Erläuterung dieses Standes der Technik wird auf die Figuren 7 und 8 Bezug genommen.

Figur 7 zeigt eine erste Lenksäulenanordnung mit einer Lenksäule 1, die über ein Schwenkgelenk 2 an einer Pedaleinheit 3 des Fahrzeuges befestigt ist. An der Lenksäule 1 ist ein Lenkrad 4 befestigt, das in der normalen Fahrposition unter einem Winkel α geneigt ist. Die Lenksäule 1 ist über ein Dämpfungselement 5 mit der Karosserie des Fahrzeuges verbunden. Bei einem Unfall kommt der Fahrer mit seinem Oberkörper zuerst mit der Unterseite 6 des Lenkrades 4 in Berührung und erzeugt damit eine Kraft, die durch einen Pfeil 7 dargestellt ist. Diese Kraft erzeugt im Schwenkgelenk 2 ein Drehmoment, das durch einen Pfeil 8 dargestellt ist. Darauf kann sich die Lenksäule 1 samt dem Lenkrad 4 unter Deformierung des Dämpfungselementes 5 in die gestrichelt dargestellte Position verschwenken. Man erkennt, daß sich dadurch der Winkel α verkleinert, was die Flächenpressung des Lenkrades gegen den Fahrer und damit Verletzungsgefahr vergrößert.

Ein ähnliches System gemäß vorbekanntem Stand der Technik ist in Figur 8 gezeigt. Dort ist das Schwenklager 2 näher dem Lenkrad 4 angeordnet und so ausgebildet, daß es bei Überschreiten einer Kraftschwelle ein Schwenken zuläßt, beispielsweise durch eine reibschlüssige Verbindung im Schwenkgelenk 2, wobei aber auch hier der Winkel α sich durch das Verschwenken verkleinert.

Selbstverständlich ist bei dem in den Figuren 7 und 8 beschriebenen Stand der Technik vorgesehen, daß bei Zugkräften, also entgegengesetzt zur Richtung des Pfeiles 7, kein Verschwenken möglich ist.

Es ist Aufgabe der Erfindung, eine Lenksäulenanordnung zu schaffen, bei der sich die Kontaktfläche zwischen Lenkrad und Fahrer im Falle eines Unfalles vergrößert und gleichzeitig Lenkrad und Lenksäule unter Absorption von Energie vom Fahrer entfernen bzw. der Bewegung des Körpers des Fahrers folgen.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht in einer Hebelanordnung von mindestens zwei Hebeln, die jeweils beidseitig Schwenkgelenke aufweisen, wobei die Lenksäule mit jeweils einem Ende der Hebel verbunden ist und die Länge und Anordnung der Hebel so gewählt ist, daß eine auf das Lenkrad ausgeübte, nach vorne gerichtete Kraft die Hebel so verschwenkt, daß sich das Lenkrad in Richtung der Kraft bewegt und gleichzeitig seinen Winkel (α) zur Fahrbahnebene vergrößert.

Im folgenden wird die Erfindung anhand eines Ausführungsbeispieles im Zusammenhang mit den Zeichnungen ausführlicher erläutert. Es zeigt:
- Figur 1: ein schematisches Diagramm der Lenksäulenanordnung nach der Erfindung;
- Figur 2: eine schematische Seitenansicht der Lenksäulenanordnung nach der Erfindung mit einem Fahrer;
- Figur 3: ein konkretes Ausführungsbeispiel einer Lenksäulenanordnung nach der Erfindung;
- Figur 4: verschiedene Varianten von bei der Erfindung verwendeten Dämpfungselementen;
- Figur 5: zwei Varianten eines bei der Erfindung verwendeten Querversteifungsbleches; und
- Figur 6: eine Variante der Lenksäulenanordnung nach der Erfindung mit einem weiteren Dämpfungselement.
- Figur 7 und 8: zeigen Lenksäulenordnungen nach dem Stand der Technik.

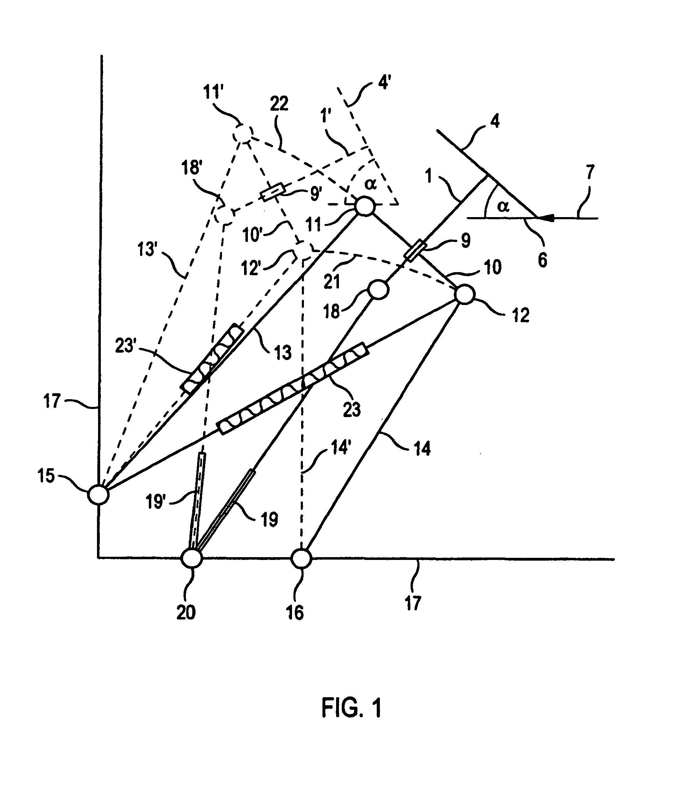

Figur 1 verdeutlicht in einer Prinzipskizze das Grundprinzip der Erfindung.

Wie im Stand der Technik ist an der Lenksäule 1 das Lenkrad 4 befestigt, das in der mit durchgezogenen Linien dargestellten Fahrposition gegenüber einer Horizontalen, die üblicherweise die Fahrebene des Fahrzeuges ist, einen Winkel α bildet. Die Lenksäule ist über ein Lager 9 drehbar an einem Querträger 10 gelagert, wobei die Lagerung winkelstarr ist, d.h. die Lenksäule 1 hat stets einen konstanten Winkel zu dem Querträger 10. Beide Enden des Querträgers 10 sind über Schwenklager 11 und 12 mit je einem Schwenkhebel 13 und 14 verbunden, deren andere Enden über Schwenklager 15 und 16 mit ortsfesten Teilen 17 des Fahrzeuges verbunden sind, die beispielsweise eine Wand der Fahrerkabine, eine Pedaleinheit sein können.

Die Lenksäule 1 ist über ein weiteres Gelenk 18, das üblicherweise ein Kardan-Gelenk ist, mit einer Teleskopstange 19 verbunden, die über ein weiteres Gelenk 20, das ebenfalls ein Kardan-Gelenk sein kann, mit weiteren nicht dargestellten Elementen der Fahrzeuglenkung verbunden ist.

Bei einem Unfall wird der Fahrer des Fahrzeuges in Richtung des Pfeiles 7 nach vorne bewegt und berührt mit seinem Bauch oder Brustkorb die Unterseite 6 des Lenkrades 4 und übt damit eine in Richtung des Pfeiles 7 gerichtete Kraftkomponente auf das Lenkrad aus, das starr mit der Lenksäule 1 verbunden ist, die wiederum winkelstarr mit dem Querträger 10 verbunden ist. Diese Kraft wirkt über die beiden Schwenklager 11 und 12 auf die Schwenkhebel 13 und 14, die sich über ihre jeweiligen Schwenklager 15 und 16 verschwenken können. Das Schwenklager 11 kann sich somit auf einer kreisbogenförmigen Bahn 21 bewegen, deren Kreismittelpunkt im Schwenklager 15 liegt und deren Radius der Länge des Schwenkhebels 13 entspricht. In analoger Weise kann sich das Schwenklager 12 auf einer kreisbogenförmigen Bahn 22 bewegen, deren Kreismittelpunkt im Schwenklager 16 liegt und deren Radius der Länge des Schwenkhebels 14 entspricht. Da die beiden Schwenklager 11 und 12 durch den Querträger 10 in konstantem Abstand zueinander gehalten sind, ergibt sich dadurch eine Zwangsführung auf einer eindeutig vorgegebenen Bahn, was zur Folge hat, daß der Querträger 10 seine Winkellage oder Orientierung im Raum ändert, womit auch die Lenksäule 1 und das Lenkrad 4 ihre Winkellage ändern und zwar dergestalt, daß sich der Winkel α vergrößert und damit besser dem Körper des Fahrers anpaßt, um die gesamte Aufprallfläche des Lenkrades mit dem Körper des Fahrers in Berührung zu bringen.

Wie aus Figur 1 zu ersehen ist, verschiebt sich bei der geschilderten Bewegung zwangsläufig auch das Gelenk 18, was eine Längenänderung der Teleskopstange 19 zur Folge hat. Dem Fachmann ist klar, daß alternativ oder kumulativ auch die Lenksäule 1 im Bereich zwischen den Lagern 9 und 18 teleskopartig ausgebildet sein kann. Auch kann der Querträger 10 integrierter Bestandteil der Lenksäule 1 sein.

Selbstverständlich darf die oben beschriebene Bewegung nur dann stattfinden, wenn die in Richtung des Pfeiles 7 wirkende Kraft einen vorgegebenen Wert überschritten hat. Dies kann in verschiedener Weise erreicht werden. Nach einem Ausführungsbeispiel der Erfindung ist ein Dämpfungselement 23 vorgesehen, das mindestens eines der Elemente 9, 10, 11, 12 oder 13 mit einem ortsfesten Teil 17 verbindet. In Figur 1 ist als Beispiel ein Dämpfungselement 23 dargestellt, das die beiden Lager 12 und 15 miteinander verbindet. Dieses Dämpfungselement kann seine Länge bei Überschreiten eines Kraftschwellwertes ändern indem es unter Absorption kinetischer Energie kollabiert und so die beschriebene Bewegung zulassen. Beispielsweise kann es sich um ein verformbares Blech handeln, das bei einer bestimmten Knicklast knickt und damit kinetische Energie abbaut. Möglich ist auch ein federvorgespannter Kolben oder eine pneumatisch oder hydraulisch arbeitende Kolben-Zylinder-Anordnung mit federvorgespannten Ventilen.

Nach einer anderen Alternative können auch die Schwenklager 11, 12, 15 und 16 so ausgebildet sein, daß sie erst bei Überschreiten eines vorgegebenen Drehmomentes eine Schwenkbewegung erlauben, was beispielsweise durch Schwenklager mit reibschlüssiger Verbindung realisiert werden kann.

Zusammenfassend erkennt man aus Figur 1, daß das Lenkrad 4 bei einem Unfall mit Krafteinwirkung auf das Lenkrad in Richtung des Pfeiles 7 nicht nur seine räumliche Lage ändert, nämlich nach vorne in Richtung des Pfeiles 7 und damit vom Fahrersitz fortgedrückt wird, sondern zusätzlich auch seine Winkellage dahingehend ändert, daß sich der Winkel α des Lenkrades 4 vergrößert, das Lenkrad also eine vertikalere Lage einnimmt.

Dem Fachmann ist klar, daß die Position und damit die Abstände der Schwenklager 11, 12, 15 und 16 und damit auch die Länge der Schwenkhebel 13 und 14 sowie die Länge des Querträgers 10 so zu wählen sind, daß sich die gewünschte Verstellung des Winkels α des Lenkrades 4 ergibt, und daß auch der Verschiebeweg des Lenkrades in Richtung des Pfeiles 7 zu begrenzen ist, damit der Kopf des Fahrers auch in der Endposition noch im Abstand zur Windschutzscheibe des Fahrzeuges bleibt. Auch ist die Vergrößerung des Winkels α so zu wählen, daß entsprechend der normalen Sitzposition des Fahrers, die auch durch den Abstand zwischen Sitz und Lenkrad bestimmt wird, der Winkel α der Lage des Oberkörpers des Fahrers bei einem Unfall anzupassen ist. Beispielsweise darf also das Lenkrad nicht senkrecht stehen (Winkel α wäre dann 90°), da dann die Oberkante des Lenkrades mit verstärkter Flächenpressung auf den Fahrer einwirken würde.

Dem Fachmann ist weiterhin klar, daß die Schwenklager 11, 12, 15 und 16 so anzuordnen sind, daß sich kein Parallelogramm ergibt, d.h. die Verbindungslinie zwischen den Schwenklagern 15 und 16 darf nicht parallel zur Verbindungslinie der Lager 11 und 12, d.h. zum Querträger 10 liegen, da sich sonst keine Winkelverstellung des Winkels α ergeben würde.

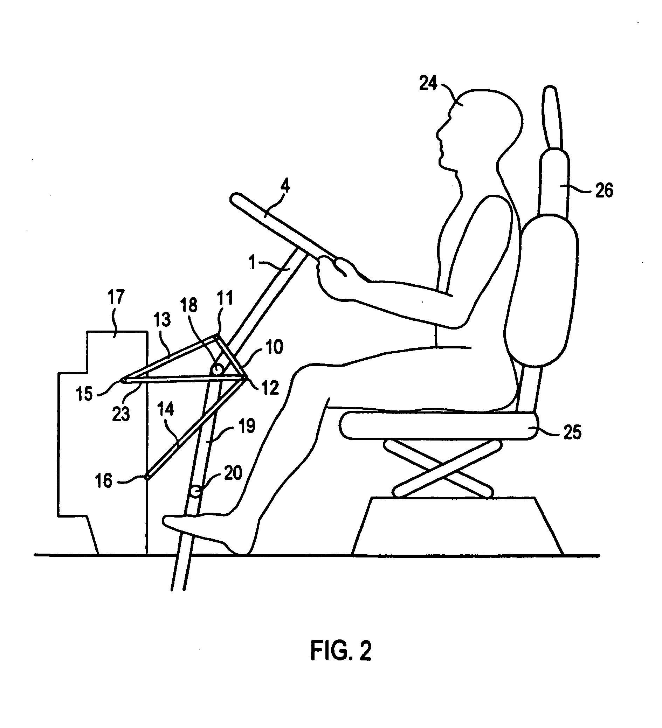

Figur 2 zeigt eine schematische Seitenansicht der Lenksäulenanordnung nach der Erfindung, bei der die Position eines Fahrers 24 und eines Sitzes 25 mit Rückenlehne 26 dargestellt ist. Der obere Schwenkhebel 13 ist über sein Schwenklager 15 an dem ortsfesten Teil angelenkt, das hier eine Pedaleinheit 17 ist. Ebenso ist das untere Schwenklager des unteren Schwenkhebels 14 an der Pedaleinheit befestigt. Das Dämpfungselement 23 liegt hier zwischen den beiden Schwenklagern 12 und 15. Die übrigen Teile mit ihren Bezugszeichen wurden im Zusammenhang mit Figur 1 ausführlich erläutert, so daß eine weitere detaillierte Beschreibung überflüssig ist.

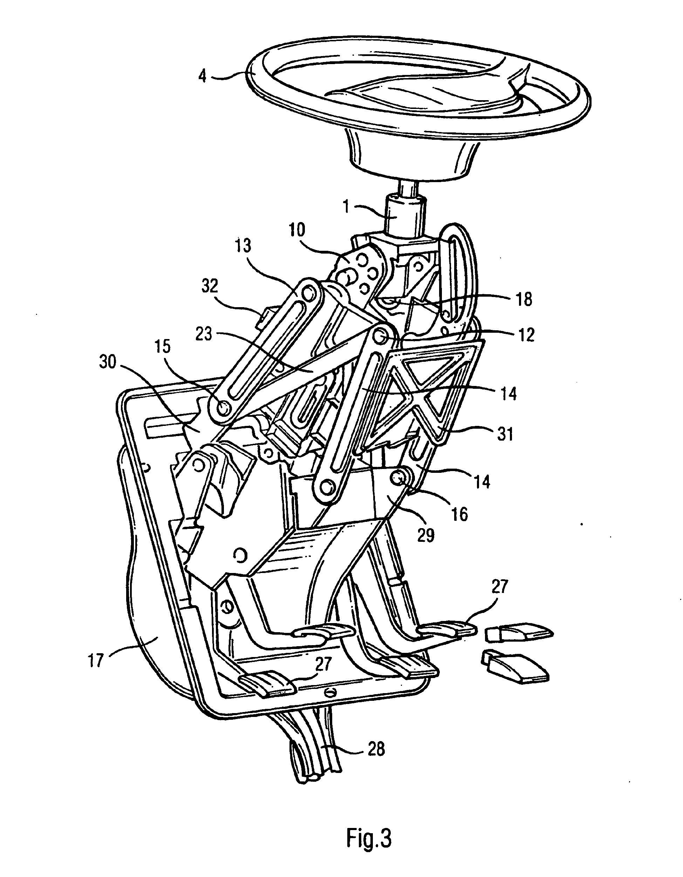

Figur 3 zeigt ein konkretes Ausführungsbeispiel einer Lenksäulenanordnung nach der Erfindung, die hier mit einer Pedaleinheit 17 verbunden ist. Die Pedaleinheit 17 enthält die üblichen Pedale 27 und wird zusammen mit der kompletten Lenksäulenanordnung als ein Einbauteil geliefert, das in die Karosserie eines Fahrzeuges eingesetzt werden kann und über Kabel 28 die üblichen elektrischen Verbindungen zum Lenkrad und ggf. zu den Pedalen bzw. den dort vorhandenen Schaltern, Gebern und Sensoren herstellt.

Die Schwenkhebel 13 und 14 sowie auch das Dämpfungselement 23 sind in dieser praktischen Ausführungsform je zweifach vorhanden, d.h. paarweise spiegelbildlich zu einer Symmetrieebene, welche durch die Lenksäule 1 geht. Die Schwenklager 15 und 16 sind an entsprechenden Trägern 29 und 30 befestigt, die mit der Pedaleinheit 17 verbunden sind. Die beiden unteren Schwenkhebel 14 sind über ein Stabilisierungsblech 31 und die beiden Schwenkhebel 13 über ein Stabilisierungsblech 32 miteinander verbunden, um der gesamten Anordnung die erforderliche Querstabilität zu geben.

Das Dämpfungselement 23 ist hier als verformbares Blech ausgebildet, das sich bei einer vorgegebenen Knicklast energieabsorbierend verformt und damit die oben beschriebene Schwenkbewegung zuläßt.

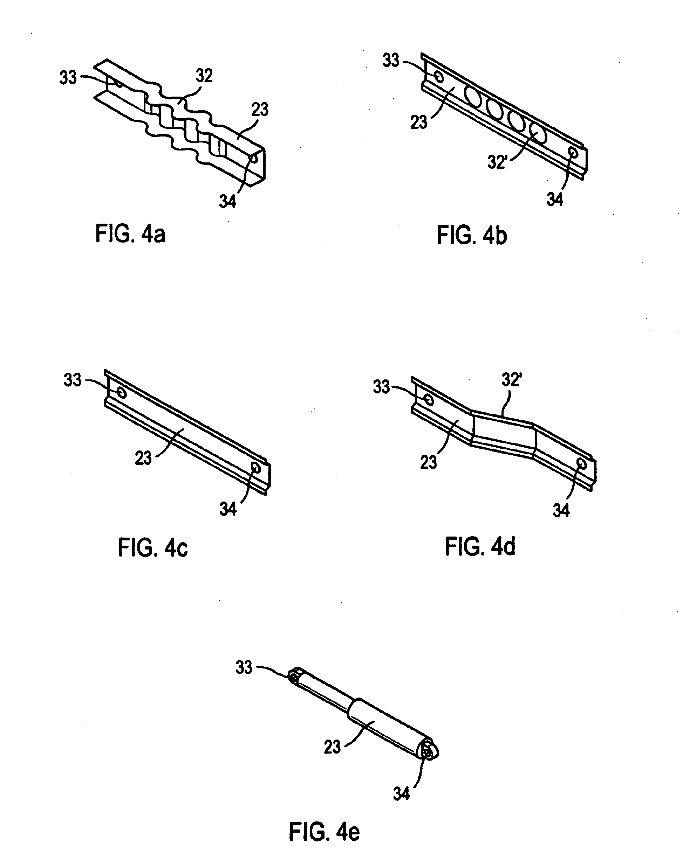

Figur 4 zeigt entsprechende Ausführungsbeispiele von Dämpfungselementen. In Figur 4a hat das Dämpfungselement 23 ein U-förmiges Profil und in seinen Seitenwänden Wölbungen 32 als Sollknickstelle. In Figur 4b hat das Element mehrere Löcher zur Bildung von Sollknickstellen 32' in Längsrichtung. In Figur 4c ist das Profil geradlinig, während es in Figur 4d als Sollknickstellen 32' abgeknickt ist. In Figur 4e wird ein eingangsbeschriebener Stoßdämpfer als Dämpfungselement gezeigt. In allen Fällen hat das Dämpfungselement beidseitig Bohrungen 33 und 34 zur Befestigung in den Lagern 15 und 12.

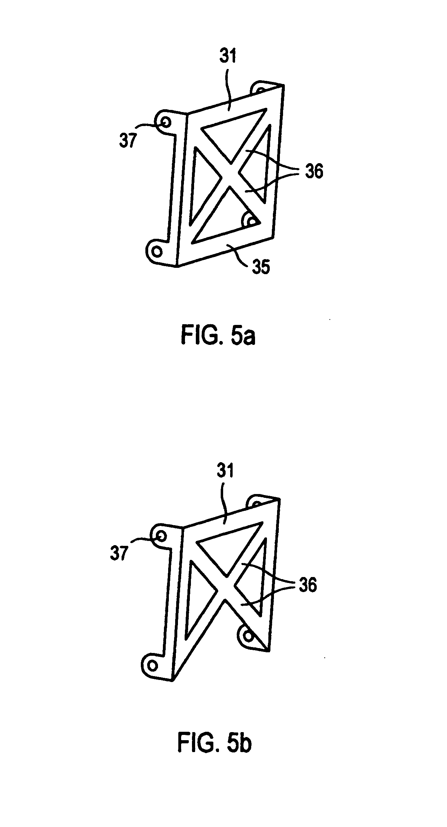

Figur 5 zeigt zwei Ausführungsbeispiele des Querversteifungsbleches 31. Im Ausführungsbeispiel der Figur 5 ist es ein rechteckiger Rahmen 35 mit zwei Diagonalstreben 36, wobei der Rahmen 35 an zwei Schenkeln umgebogen ist zur Bildung von Laschen 37, die entsprechende Bohrungen zur Befestigung an den Schwenkhebeln, wie z.B. 14 haben. Im Ausführungsbeispiel der Figur 5b ist das Querversteifungsblech ein U-förmiger Rahmen mit zwei Diagonalstreben 36 und den entsprechenden Bohrungen. Statt flachen und Blechen können auch Stangen aus Rundstangen oder mit sonstigen Profil verwendet werden.

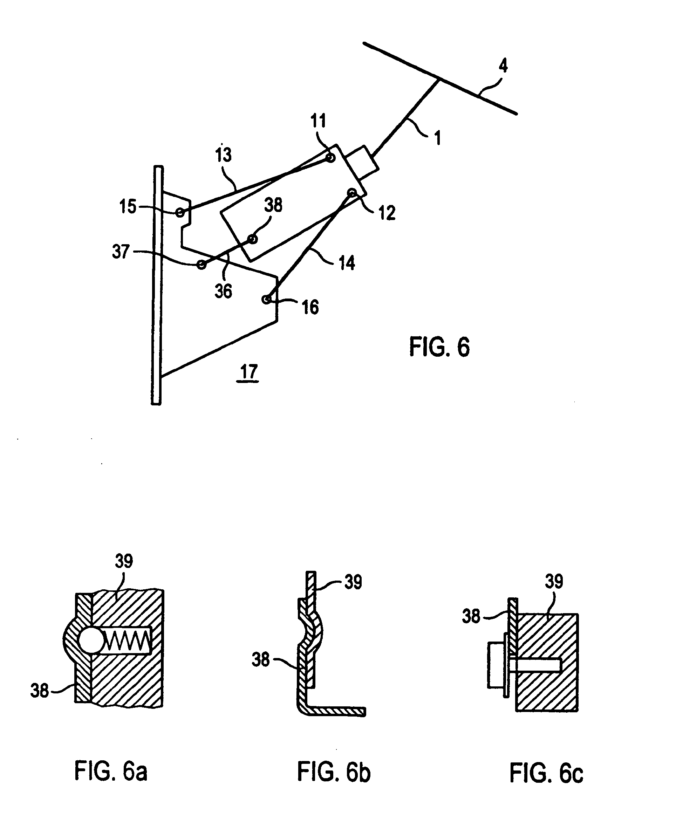

Figur 6 zeigt noch einmal schematisch, daß die Lenksäulenanordnung über ein zusätzliches Dämpfungselement 36 mit der Pedaleinheit 17 verbunden sein kann und zwar wiederum über Schwenkgelenke 37 und 38, wobei das Dämpfungselement 36 längenverstellbar ist, um die beschriebenen Bewegungen zu ermöglichen. Das Dämpfungselement 36 dient primär der Dämpfung von Vibrationen und Schwingungsbewegungen. Die Längenverstellbarkeit kann gemäß Figur 6a dadurch erreicht werden, daß zwei Elemente 38 und 39 relativ gegeneinander verschieblich sind und kraftschlüssig aneinander gleiten. Im Ausführungsbeispiel der Figur 6a werden die beiden Elemente 38 und 39 durch eine Zugfeder gegeneinander gespannt. Im Ausführungsbeispiel der Figur 6b sind die beiden Elemente 38 und 39 über eine Sicke miteinander verklebt, wobei die Klebestelle ab einer bestimmten Kraft aufreißt. In Figur 6c sind die beiden Elemente 38 und 39 miteinander verschraubt und können sich bei einer vorgegebenen Kraft voneinander lösen.

Abschließend sei noch darauf hingewiesen, daß die Lenksäulenanordnung natürlich auch an anderen Fahrzeugteilen angebracht werden kann, beispielsweise an der Feuerschutzwand der Fahrerkabine oder auch an sonstigen Karosserieteilen. Weiter ist noch zu erwähnen, daß die gesamte Struktur in bezug auf Kräfte, die entgegengesetzt zur Richtung des Pfeiles 7 wirken, fest ist, da das Dämpfungselement 23 bzw. 36 so auszubilden ist, daß es die genannte Bewegung unterbindet. In den Ausführungsbeispielen ist es also nur verkürzbar, d.h. es kann kollabieren, es ist jedoch nicht dehn- oder streckbar.

## Patentansprüche

1. Lenksäulenanordnung mit einer Lenksäule (1) und einem Lenkrad (4), das unter einem Winkel (α) gegenüber der Fahrebene des Fahrzeuges ausgerichtet ist, wobei die Lenksäule (1) mit zwei Schwenkhebeln (13, 14) verbunden ist, die jeweils an beiden Enden je ein Schwenklager (11, 15; 12, 16) aufweisen, wobei die an der dem Lenkrad (4) entfernten Seite der Schwenkhebel (13, 14) liegenden Schwenklager (15, 16) karroseriefest (17) angebracht sind, während die am anderen Ende der Schwenkhebel (13, 14) angebrachten Schwenklager (11, 12) mit der Lenksäule (1) in einem wechselseitigen Abstand (10) von größer Null angeordnet sind, wobei die Anordnung der Schwenkhebel (13, 14) und der Schwenklager (11, 12, 15, 16) so gewählt ist, daß bei einer in Vorwärts-Fahrtrichtung (7) wirkenden Kraft auf das Lenkrad (4) das Lenkrad (4) und die Lenksäule (1) gleichzeitig in Vorwärts-Fahrtrichtung bewegt werden und das Lenkrad (4) den genannten Winkel (α) vergrößert, **dadurch gekennzeichnet**, mindestens ein Dämpfungselement (23, 36) vorgesehen ist, das einerseits karroseriefest (17) und andererseits mit mindestens einem beweglichen Teil der Lenksäulenanordnung verbunden ist, wobei das Dämpfungselement (23, 36) beidseitig Schwenklager (12, 15; 32, 38) aufweist und so ausgebildet ist, daß es unter Absorption kinetischer Energie kollabiert, wenn es mit einer Kraft beaufschlagt wird, die größer als ein vorgegebener Schwellwert ist.

2. Lenksäulenanordnung nach Anspruch 1, **dadurch gekennzeichnet, daß** das Dämpfungselement (23) beidseitig der Lenksäule paarweise vorhanden ist.

3. Lenksäulenanordnung nach Anspruch 1 oder 2, **dadurch gekennzeichnet, daß** das Dämpfungselement (23) ein verformbares Blech ist, das bei einer bestimmten Knicklast knickt und damit kinetische Energie abbaut.

4. Lenksäulenanordnung nach Anspruch 1 oder 2, **dadurch gekennzeichnet, daß** das Dämpfungselement (23) dadurch realisiert ist, daß die Schwenklager (11, 12, 15 und 16) eine reibschlüssige Verbindung aufweisen, die erst bei Überschreiten eines vorgegebenen Drehmomentes eine Schwenkbewegung erlauben.

5. Lenksäulenanordnung nach einem der Ansprüche 1 bis 4, **dadurch gekennzeichnet, daß** die Lenksäulenanordnung an einer Pedaleinheit (17) eines Fahrzeuges angebracht ist.

## Claims

1. Steering column arrangement comprising a steering column (1) and a steering wheel (4), which is oriented at an angle (α) to the running plane of the vehicle, the steering column (1) being connected to two pivoted levers (13, 14), which each have a pivot bearing (11, 15; 12, 16) at both ends, the pivot bearings (15, 16) situated on the side of the pivoted levers (13, 14) remote from the steering wheel (4) being fixedly (17) attached to the body, whilst the pivot bearings (11, 12) attached to the other end of the pivoted levers (13, 14) are arranged at a reciprocal distance (10) from the steering column (1) of greater than zero, the arrangement of the pivoted levers (13, 14) and the pivot bearings (11, 12, 15, 16) being selected so that under a force acting on the steering wheel (4) in the forward direction of travel (7) the steering wheel (4) and steering column (1) are moved simultaneously in the forward direction of travel and the steering wheel (4) increases said angle (α), **characterized in that** at least one damping element (23, 36) is provided, which on one side is fixedly (17) connected to the body and on the other side is connected to at least one moving part of the steering column arrangement, the damping element (23, 36) having pivot bearings (12, 15; 32, 38) on both sides and being designed so that it collapses, absorbing kinetic energy, when it is subjected to a force which is greater than a predetermined threshold.

2. Steering column arrangement according to Claim 1, **characterized in that** the damping element (23) is provided in pairs on both sides of the steering column.

3. Steering column arrangement according to Claim 1 or 2, **characterized in that** the damping element (23) is a deformable plate which buckles under a specific buckling load and thus dissipates kinetic energy.

4. Steering column arrangement according to Claim 1 or 2, **characterized in that** the damping element (23) is realized by virtue of the pivot bearings (11, 12, 15 and 16) having a frictional connection, which permits a pivoting movement only if a predefined torque is exceeded.

5. Steering column arrangement according to one of Claims 1 to 4, **characterized in that** the steering column arrangement is attached to a pedal unit (17) of a vehicle.

## Revendications

1. Ensemble colonne de direction comprenant une colonne de direction (1) et un volant (4) qui set orienté à un angle (α) relatif au plan de mouvement du véhicule, à ladite colonne de direction (1) étant reliée à deux leviers pivotants (13, 14) munis d'un palier pivotant respectif (11, 15; 12, 16) aux deux extrémités, dans lequel les paliers pivotants (15, 16) disposés au côté éloigné dudit volant sont montés de façon fixe à la carrosserie, pendant que les palies pivotants (11, 12) montés à l'autre extrémité desdits leviers pivotants (13, 14) sont arrangés à la colonne de direction à un écart mutuel (10) plus grand que zéro, dans lequel l'arrangement desdits leviers pivotants (13, 14) et des paliers pivotants (11, 12, 15, 16) est choisi de manière qu'au cas d'une force agissant en sens de direction avant de circulation (7) sur ledit volant (4) ledit volant (4) et la colonne de direction (1) soient déplacés en même temps en sens de direction avant de circulation et ledit volant (4) élargisse ledit angle (α), **caractérisé en ce qu'**au moins un seul élément amortisseur (23, 36) est disposé, qui est raccordé, d'un côté, de façon fixe à la carrosserie (17) et, d'autre côté, à au moins une partie mobile de l'ensemble colonne de direction, audit élément amortisseur (23, 36) étant muni des paliers pivotants (12, 15; 32, 38) de chaque côté et étant configuré de façon, qu'il affaisse en absorbant de l'énergie cinétique, quand il est soumis à un effort dépassant une valeur de seuil prédéterminée.

2. Ensemble colonne de direction selon la revendication 1, **caractérisé en ce que** ledit élément amortisseur (23) est disposé par paires aux deux côtés de la colonne de direction.

3. Ensemble colonne de direction selon la revendication 1 ou 2, **caractérisé en ce que** ledit élément amortisseur (23) est une feuille déformable, qui se plie à une charge de flambage définie, en réduisant de l'énergie cinétique.

4. Ensemble colonne de direction selon la revendication 1 ou 2, **caractérisé en ce que** ledit élément amortisseur (23) et réalisé par la configuration d'une connexion par frottement auxdits paliers pivotants (11, 12, 15 et 16), qui ne permettent un mouvement pivotant que quand un couple prédéterminé est dépassé.

5. Ensemble colonne de direction selon une quelconque des revendications 1 à 4, **caractérisé en ce que** l'ensemble colonne de direction est monté à une unité à pédale (17) d'un véhicule.
